# EUROPEAN PATENT APPLICATION

(11) **EP 4 783 323 A1**
(43) Date of publication of application: **29.07.2026**
(21) Application number: 25187655.3
(22) Date of filing: 04.07.2025
(51) Int. Cl.: H01M 50/213, H01M 50/242, H01M 50/249, H01M 50/262, H01M 50/289, H01M 50/507, H01M 50/514

(54) **BATTERY MODULE WITH IMPROVED STABILITY OF ELECTRIC CONNECTION OF BATTERY CELLS**

(30) Priority: 22.01.2025 KR 20250009437
(71) Applicant: Ophir Co., Ltd., Uijeongbu-si, Gyeonggi-do 11644 (KR)
(72) Inventor: JOUNG, Dukgeo, 11784 Uijeongbu-si (KR)
(74) Representative: Valet Patent Services Limited

(57) **Abstract**

Disclosed herein is a battery module. The battery module includes: a first bracket including a first tray in which first wells are formed; a second bracket including a second tray in which second wells are formed; a plurality of cells configured to be at least partially inserted into the first and second wells; one or more first electrodes disposed between the first tray and the cells; one or more second electrodes disposed between the second tray and the cells; and one or more elastic coupling members configured to provide the elastic force intended to at least partially tighten the first and second brackets in a third direction.

## Description

### CROSS-REFERENCE TO RELATED APPLICATION

This application claims the benefit of Korean Patent Application No. 10-2025-0009437 filed on January 22, 2025, which is hereby incorporated by reference herein in its entirety.

### BACKGROUND

### 1. Technical Field

The present invention relates to a battery module in which the stability of the electrical connection of battery cells is improved. More specifically, the present invention relates to a battery module in which the stability of the electrical connection of battery cells can be improved even without welding.

### 2. Description of the Related Art

A battery is a general term for a device that stores and discharges electrical energy. With the development of secondary battery-related technology, the application fields of batteries are diversifying.

In general, a battery cell refers to a basic unit of a battery that has a shape such as a pouch shape, a square cylinder shape, or a cylinder shape. In the case of a secondary battery, one cell may include a cathode, an anode, a separator, etc. Furthermore, a battery module is referred to as a module in which a plurality of cells are connected in series or in parallel and provide higher voltage and capacity. Furthermore, a battery pack can be constructed by connecting a plurality of battery modules and applying a battery management system (BMS).

Conventionally, battery modules are manufactured by electrically connecting a plurality of cells, for example, by welding so-called bus bars to the battery cells.

### SUMMARY

Fixing a plurality of cells by welding or like may be an effective way to maintain stable electrical connections between the cells despite external impact and vibration. However, this may increase not only the manufacturing cost of a battery module but also the maintenance cost of the battery module. For example, when only some of the cells included in the battery module fail or their lifespan is exhausted, it is considerably difficult and expensive to replace only the failed cells due to welded portions. For example, replacing some of the failed cells may cost more than manufacturing a new battery module, and this leads to the disposal of normal cells, which is not desirable in terms of the effective use of resources and environmental protection.

Meanwhile, in the case where fixation designed to integrate metals such as welding is not adopted, even when the arrangement structure of battery cells is slightly changed due to external impact or vibration, changes in electrical characteristics may occur.

Accordingly, an object to be achieved by the present invention is to provide a battery module in which electrical characteristics may not be changed even under external impact by improving the contact stability between the positive/negative terminals of cells, included in the battery module, and metal conductors (electrodes) for connecting these terminals in series/parallel even when the cells are not welded.

The objects of the present invention are not limited to the obj ect mentioned above, and other obj ects that are not mentioned will be clearly understood by those skilled in the art from the following description.

According to an aspect of the present invention, there is provided a battery module including: a first bracket including a first tray in which first wells are formed; a second bracket including a second tray in which second wells are formed; a plurality of cells configured to be at least partially inserted into the first and second wells; one or more first electrodes disposed between the first tray and the cells; one or more second electrodes disposed between the second tray and the cells; and one or more elastic coupling members configured to provide the elastic force intended to at least partially tighten the first and second brackets in a third direction.

The first bracket may include one or more protrusions arranged on the first end surface thereof, the second bracket may include one or more protrusion depressions formed on the second end surface thereof; and, in a state where the battery module has been assembled, the protrusions may be at least partially inserted into the protrusion depressions, and the first and second end surfaces may be spaced apart and face each other in the third direction.

The first tray may include at least one first ridge defining a plurality of first wells, and the second tray may include at least one second ridge defining a plurality of second wells; one or more first bolt holes may be formed in the first ridge, and one or more second bolt holes may be formed in the second ridge; the battery module may further include one or more bolts configured to be at least partially inserted into or pass through the first or second bolt holes; and, in a state where the battery module has been assembled, the bottom surface of the first ridge where the first bolt holes are exposed and the top surface of the second ridge where the second bolt holes are exposed may be spaced apart and face each other in the third direction.

The elastic coupling members may be arranged to tighten and couple the first end surface of the first bracket and the second end surface of the second bracket spaced apart from the first end surface in the third direction.

The first bracket may further include a plurality of first coupling posts protruding from the first tray, and the second bracket may further include a plurality of second coupling posts protruding from the second tray; at least some of the plurality of first coupling posts may include protrusions, and another some thereof may include protrusion depressions; at least some of the plurality of second coupling posts may include protrusions, and another some thereof may include protrusion depressions; and the first bracket including the first coupling posts and the second bracket including the second coupling posts may have exclusive arrangements that do not overlap each other in any rotational state.

The first tray may include peripheral portions and central portions surrounded by the peripheral portions, and the heights of the peripheral portions and the central portions in the third direction may be elastically deformed differently when the battery module has been assembled.

Specific details of other embodiments are included in the detailed description of the invention.

According to the embodiments of the present invention, the battery cells and the electrode units may be continuously brought into close contact and fixed between the first and second brackets, which are provided as a pair, by using the elastic coupling members even when movement occurs in the battery cells. Therefore, the electrical connections between the cells and electrode units may be stably maintained despite external impact or vibration.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is a perspective view of a battery module according to one embodiment of the present invention;
FIG. 2 is an exploded perspective view of FIG. 1;
FIG. 3 is an exploded perspective view showing the first bracket and first electrode unit of FIG. 2;
FIG. 4 is an exploded perspective view showing the bottom surfaces of the first bracket and first electrode unit of FIG. 3;
FIG. 5 is a plan view of the first bracket of FIG. 3, which is a view of the first bracket having an arrangement for the assembly of the battery module as viewed from a position thereabove;
FIG. 6 is a bottom view of the first bracket of FIG. 3, which is a view of the first bracket having an arrangement for the assembly of the battery module as viewed from a position therebelow;
FIG. 7 is an exploded perspective view of the second bracket and second electrode unit of FIG. 2;
FIG. 8 is a perspective view showing a coupling clip spring of FIG. 2;
FIG. 9 is a sectional view taken along the line A-A' of FIG. 1, which is a sectional view cut in the second direction to illustrate the centers of two most adjacent cells;
FIG. 10 is an enlarged view of region A" of FIG. 9;
FIG. 11 is a sectional view taken along the line B-B' of FIG. 1, which is a sectional view cut in the second direction to illustrate a tightening bolt;
FIG. 12 is an enlarged view of region B" of FIG. 11;
FIG. 13 is an enlarged view of region B"' of FIG. 11;
FIG. 14 shows comparative sectional views cut along lines C-C' and E-E' of FIG. 5, respectively;
FIGS. 15 and 16 are sectional views showing states in which the position of FIG. 14 changes during a process in which a battery module is assembled;
FIG. 17 is a sectional view showing a state where no cells are interposed between the first and second brackets;
FIG. 18 is an exploded perspective view of a battery module according to another embodiment of the present invention;
FIG. 19 is a perspective view of a battery module according to still another embodiment of the present invention;
FIG. 20 is an exploded perspective view of FIG. 19;
FIG. 21 is a perspective view of a battery module according to still another embodiment of the present invention; and
FIG. 22 is an exploded perspective view of FIG. 21.

### DETAILED DESCRIPTION

The advantages and features of the present invention and methods for achieving them will become clear with reference to embodiments to be described in detail below in conjunction with the accompanying drawings. However, the present invention is not limited to the embodiments to be disclosed below, but may be implemented in various different forms. The embodiments are provided only to make the disclosure of the present invention complete and to fully inform those having ordinary skill in the art, to which the present invention pertains, of the scope of the invention. The present invention is defined only by the scope of the attached claims.

Furthermore, the attached claims do not describe the technical content that constitutes the essence of the invention, but indicate what scope is claimed as a right based on the technical configuration disclosed by the detailed description of the invention. Accordingly, it is somewhat inevitable that the scope of the attached claims is composed of abstract upper concepts that include the technology disclosed in the detailed description of the invention. When those skilled in the art can understand the technical configurations or their combinations and operational effects pertaining to the attached claims through the overall specification, the attached claims should be considered to be supported by the detailed description of the invention.

That is, various changes may be made to the embodiments presented by the present invention. The embodiments to be described below are not intended to limit embodiments of the present invention, and should be understood to include all changes, equivalents, or substitutes thereof.

When any term described in the present specification is intended to be used to have a specific meaning, the meaning may be defined, used and interpreted accordingly. Unless otherwise defined, all terms (including technical and scientific terms) used in the present specification may be used to have meanings that can be commonly understood by those having ordinary skill in the art to which the present invention pertains. Furthermore, the terms defined in commonly used dictionaries should not be interpreted ideally or excessively unless explicitly specifically defined.

In the present specification, "and/or" includes all combinations of each and one or more of the items mentioned. Furthermore, a singular from includes a plural form unless specifically stated in the phrase. The terms "comprises" and/or "comprising" used herein do not exclude the presence or addition of one or more other components in addition to the mentioned components. The numerical range using "to" indicates a numerical range that includes the values described before and after it as the lower and upper limits, respectively. "About" or "approximately" refers to a value or numerical range within 20% of the value or numerical range described after it.

In the present specification, ordinal modifiers such as "first component," "second component," "first-first component," etc. are used only to distinguish one component from another component when referring to components. Accordingly, the first component to be referred below may be referred to as the second component within the scope of the technical spirit of the present invention. For example, what is referred to as the first component in one embodiment may be referred to as the second component in another embodiment. Furthermore, it is obvious that what is referred to as the first component in the description of the invention may be referred to as the second component in the claims.

The sizes, thicknesses, widths, lengths, etc. of the components illustrated in the drawings may be exaggerated or reduced for convenience and clarity of description, and accordingly, the present invention is not limited to the illustrated forms.

The spatially relative terms "above," "upper," "on," "below," "beneath," "lower," etc. may be used to easily describe the relationship between one element or component and another element or component as depicted in the drawings. The spatially relative terms should be understood as terms that include different directions of components during use in addition to the directions depicted in the drawings. For example, a component described as being "below" or "beneath" another component may be "above" the other component when the components shown in the drawing are inverted. Accordingly, the exemplary term "below" may include both below and above directions.

In the present specification, a first direction means any one direction within a plane, and a second direction means another direction intersecting or orthogonal to the first direction within the plane. In addition, a third direction means another direction intersecting or orthogonal to the plane.

Unless otherwise defined, the term "plan view perspective" refers to a viewpoint viewed in a direction perpendicular to a plane.

Furthermore, the term "overlap" used herein may be used to describe the arrangement/arrangement relationship between components. For example, the passage "one component overlaps another component in one direction" means that the one component can be seen as overlapping the other component when viewed in the one direction and an imaginary line in the one direction can cross both the one component and the other component. For another example, "one component overlaps another component from the plan view perspective" means that the one component can be seen as overlapping the other component when viewed in a direction perpendicular to the plan view perspective.

The term "most adjacent" used in the present specification means that a third component referred to as a corresponding component is not placed or located between an adjacent component and another component. For example, when components A are most adjacent to each other, a component referred to as component A will not be placed between components A, but a component referred to as component B may be placed therebetween.

In the present specification, the term "battery module" refers to a cell assembly in which a plurality of battery cells are connected in series or in parallel, and may be used interchangeably with the term "battery pack."

The present invention will be described in detail below with reference to the accompanying drawings.

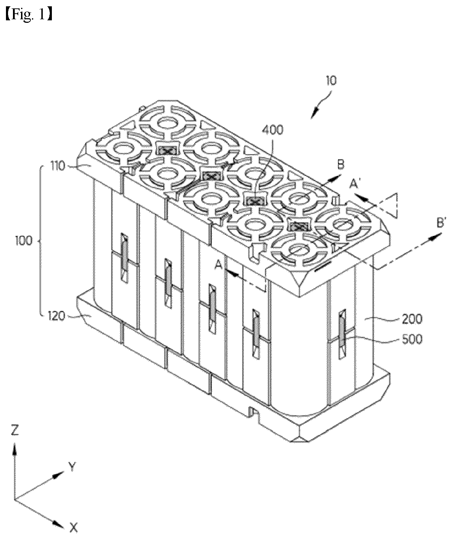

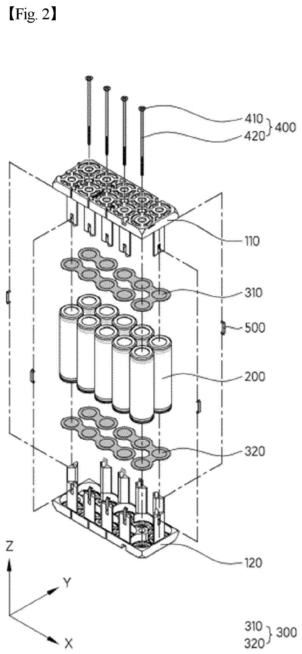

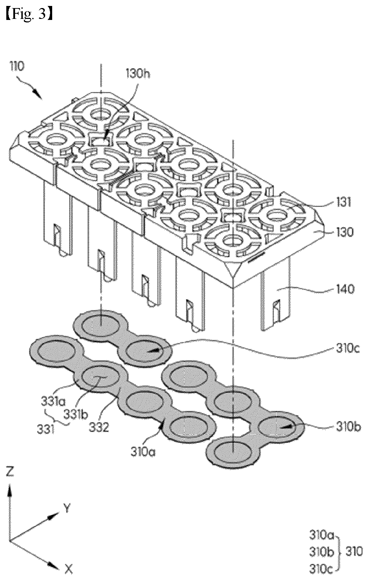

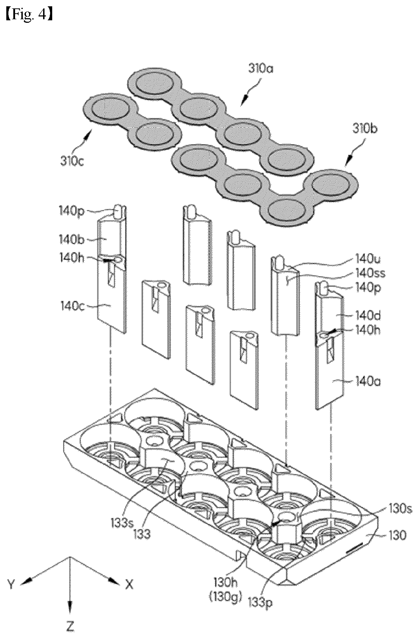

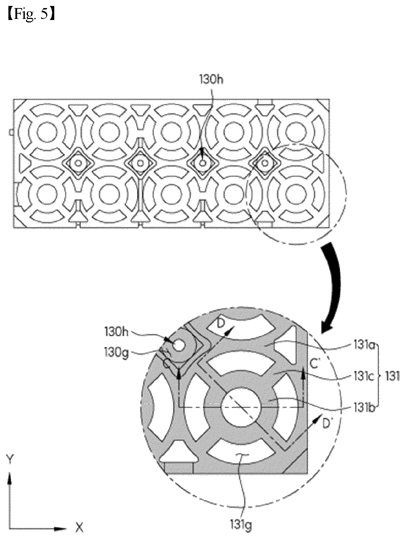

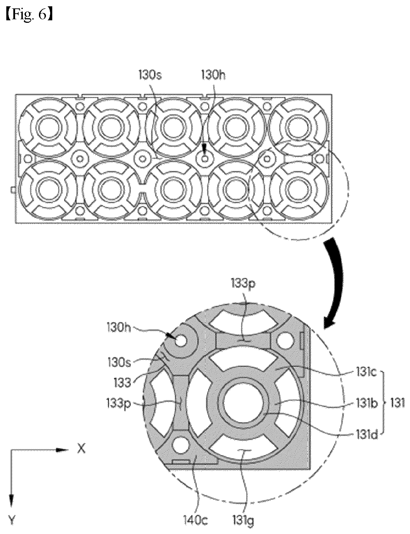

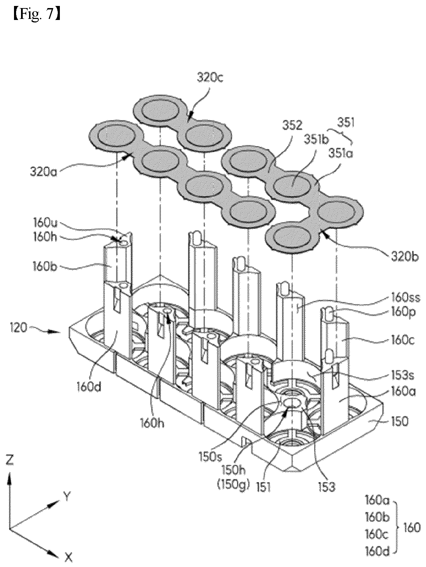

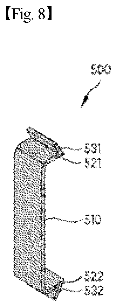

FIG. 1 is a perspective view of a battery module according to one embodiment of the present invention. FIG. 2 is an exploded perspective view of FIG. 1. FIG. 3 is an exploded perspective view showing the first bracket and first electrode unit of FIG. 2. FIG. 4 is an exploded perspective view showing the bottom surfaces of the first bracket and first electrode unit of FIG. 3. FIG. 5 is a plan view of the first bracket of FIG. 3, which is a view of the first bracket having an arrangement for the assembly of the battery module as viewed from a position thereabove. FIG. 6 is a bottom view of the first bracket of FIG. 3, which is a view of the first bracket having an arrangement for the assembly of the battery module as viewed from a position therebelow. FIG. 7 is an exploded perspective view of the second bracket and second electrode unit of FIG. 2. FIG. 8 is a perspective view showing a coupling clip spring of FIG. 2.

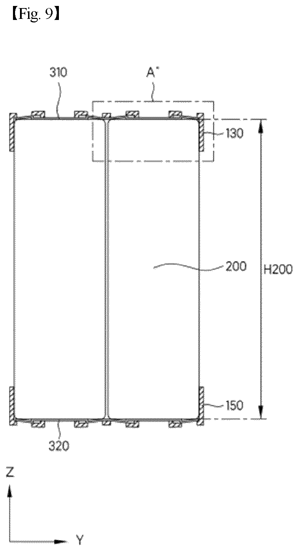

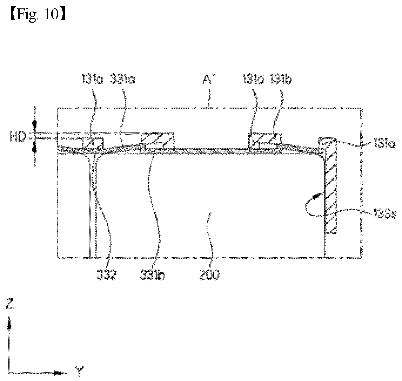

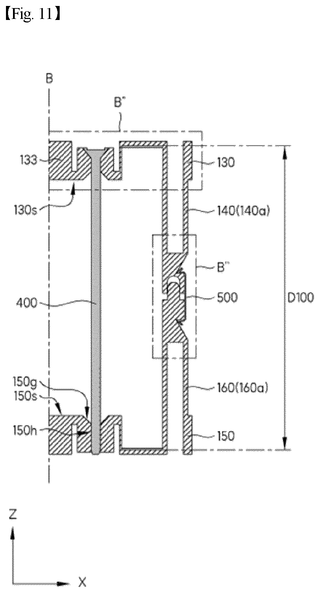

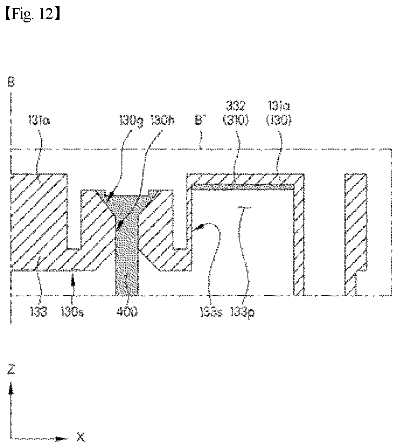

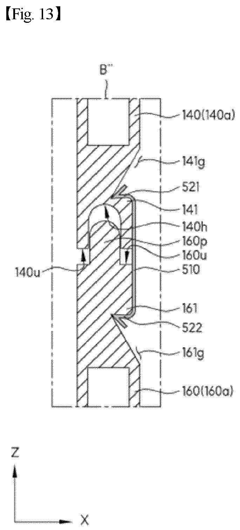

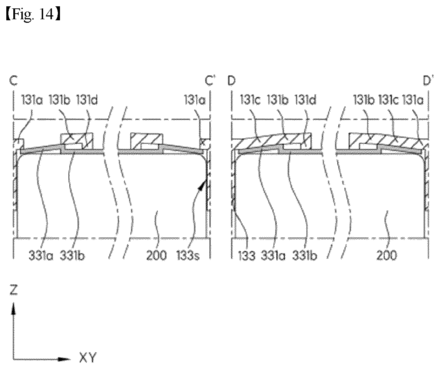

FIG. 9 is a sectional view taken along the line A-A' of FIG. 1, which is a sectional view cut in the second direction to illustrate the centers of two most adjacent cells. FIG. 10 is an enlarged view of region A" of FIG. 9. FIG. 11 is a sectional view taken along the line B-B' of FIG. 1, which is a sectional view cut in the second direction to illustrate a tightening bolt. FIG. 12 is an enlarged view of region B" of FIG. 11. FIG. 13 is an enlarged view of region B"' of FIG. 11. FIG. 14 shows comparative sectional views cut along lines C-C' and E-E' of FIG. 5, respectively.

Referring to FIGS. 1 to 14, a battery module 10 according to the present embodiment includes brackets 100 including a first bracket 110 and a second bracket 120, a plurality of battery cells 200 interposed between the brackets 100, and electrode units 300 including a first electrode unit 310 and a second electrode unit 320, and may further include tightening bolts 400 and coupling clip springs 500.

The first bracket 110 (, or an upper bracket, an upper housing, an upper holder, or an upper chassis) and the second bracket 120 (, or a lower bracket, a lower housing, a lower holder, or a lower chassis) may provide a space between which the cells 200 are arranged.

The first bracket 110 may include a first tray 130 (or a tray part) and a plurality of first coupling posts 140 (, or fixation posts, or alignment posts). In the same manner, the second bracket 120 may include a second tray 150 (or a tray part) and a plurality of second coupling posts 160 (, or fixation posts, or alignment posts). The first and second brackets 110 and 120 may at least partially or entirely be made of an elastic plastic material, such as polyvinyl chloride (PVC) or polyamide (PA), which is electrically nonconductive. That is, although FIG. 4 depicts the first tray 130 and the first coupling posts 140 in an exploded state for clarity of illustration, the first tray 130 and the first coupling posts 140 may be formed in an integrated shape without a physical boundary.

The first and second trays 130 and 150 may have concave wells (, or depressions, cups, or cell accommodation depressions) into which the upper or lower ends of the cells 200 are at least partially inserted and in which the first and second electrode units 310 and 320 may be accommodated. More specifically, the first tray 130 may have a plurality of first wells forming first well walls 133s, and the first ridge 133 of the first tray 130 may be provided between the plurality of first wells to partition the first wells. In the same manner, the second tray 150 may have a plurality of second wells forming a second well wall 153s, and the second ridge 153 of the second tray 150 may be provided between the plurality of second wells to partition the second wells. In other words, the side surfaces of the first ridge 133 may form the first well wall surfaces 133s, and the side surfaces of the second ridge 153 may form the second well wall surfaces 153s. The first well wall surface 133s and the second well wall surface 153s may provide a surface, to which a third direction Z belongs, at least partially. The base surfaces of the first and second wells may be defined by bridge structures 131, which will be described later.

In the state where the battery module 10 has been assembled, the first coupling posts 140 of the first bracket 110 and the second coupling posts 160 of the second bracket 120 may be arranged to face each other. For example, in the state where the battery module 10 has been assembled, the first coupling posts 140 may extend and protrude downward (toward the second tray 150) from the first tray 130, and the second coupling posts 160 may extend and protrude upward (toward the first tray 130) from the second tray 150.

The first coupling posts 140 may include a first-first post 140a, a first-second post 140b, first-third posts 140c, and first-fourth posts 140d. The first-first post 140a refers to the post that, in a state where the battery module 10 has been assembled, overlaps the cells 200 in the first direction X and is disposed on one side of a first direction X (the lower right side based on FIG. 1). Furthermore, the first-second post 140b refers to the post that, in a state where the battery module 10 has been assembled, overlaps the cells 200 in the first direction X and is disposed on the other side of the first direction X (the upper left side based on FIG. 1). The first-first post 140a and the first-second post 140b may be spaced apart from each other in the first direction X. Furthermore, the first-first post 140a and the first-second post 140b may overlap each other in the first direction X.

In other words, the first-first post 140a and the first-second post 140b may be arranged at the edges of the first tray 130 in the first direction X (the edges extending in a second direction Y). In an exemplary embodiment, the first-first post 140a and the first-second post 140b may each have concave side surfaces and surround the cells 200. For example, the concave side surfaces 140ss of the first-first post 140a and the first-second post 140b may be aligned with the first well wall surfaces 133s. Since the first-first post 140a and the first-second post 140b have concave sides 140ss that surround the cells 200, the first-first post 140a and the first-second post 140b may at least partially overlap any of the cells 200 in the second direction Y when the battery module 10 has been assembled.

Furthermore, the first-third posts 140c refer to the posts that, in a state where the battery module 10 has been assembled, overlap the cells 200 in the second direction Y and are arranged on one side of the second direction Y (the upper right side based on FIG. 1, and the lower left side based on FIG. 4). In an exemplary embodiment, the first-third posts 140c may be four in number.

Furthermore, the first-fourth posts 140d refer to the posts that, in a state where the battery module 10 has been assembled, overlap the cells 200 in the second direction Y and are arranged on the other side of the second direction Y (the lower left side based on FIG. 1, and the upper right side based on FIG. 4). In an exemplary embodiment, the first-fourth posts 140d may be four in number. Furthermore, the first-fourth posts 140d may be spaced apart from the first-third posts 140c in the second direction Y. Furthermore, the first-fourth posts 140d may overlap the first-third posts 140c in the second direction Y, respectively.

In other words, the first-third posts 140c and the first-fourth posts 140d may be arranged at the edges of the first tray 130 in the second direction Y (the edges extending in the first direction X). In an exemplary embodiment, the first-third posts 140c and the first-fourth posts 140d may each have concave sides and surround the cells 200. For example, the concave sides 140ss of the first-third posts 140c and the first-fourth posts 140d may be aligned with the first well wall surfaces 133s. Since the first-third posts 140c and the first-fourth posts 140d have concave sides 140ss that surround the cells 200, the first-third posts 140c and the first-fourth posts 140d may at least partially overlap any of the cells 200 in the first direction X in a state where the battery module 10 has been assembled.

In the same manner, the second coupling posts 160 may include a second-first post 160a, a second-second post 160b, second-third posts 160c, and second-fourth posts 160d. In a state where the battery module 10 has been assembled, the second-first post 160a may overlap the first-first post 140a in the third direction Z, the second-second post 160b may overlap the first-second post 140b in the third direction Z, the second-third posts 160c may overlap the first-third posts 140c in the third direction Z, and the second-fourth posts 160d may overlap the first-fourth posts 140d in the third direction Z.

More specifically, the second-first post 160a refers to the post that overlaps the cells 200 in the first direction X and is disposed on one side of the first direction X (the lower right side in FIG. 1) in a state in which the battery module 10 has been assembled. Using a protrusion-depression structure to be described later, the second-first post 160a may be aligned with the first-first post 140a in a complementary shape and arrangements.

Furthermore, the second-second post 160b refers to the post that, in a state where the battery module 10 has been assembled, overlaps the cells 200 in the first direction X and is disposed on the opposite side of the first direction X (the upper left side based on FIG. 1). The second-second post 160b may be aligned with the first-second post 140b in a complementary shape and arrangement.

Furthermore, the second-third posts 160c refer to the posts that, in a state where the battery module 10 has been assembled, overlap the cells 200 in the second direction Y and are arranged on one side of the second direction Y (the upper right side based on FIG. 1). The second-third posts 160c may be four in number. In this case, the second-third posts 160c may be aligned with the first-third posts 140c in a complementary shape and arrangement.

Furthermore, the second-fourth posts 160d refer to the posts that, in a state where the battery module 10 has been assembled, overlap the cells 200 in the second direction Y and are arranged on the other side of the second direction Y (the lower left side based on FIG. 1). The second-fourth posts 160d may be four in number. In this case, the second-fourth posts 160d may be aligned with the first-fourth posts 140d in a complementary shape and arrangement.

The second-first post 160a to the second-fourth posts 160d may also have concave side surfaces 160ss that surround the cells 200. Furthermore, the arrangement and/or configuration of the second-first post 160a to the second-fourth posts 160d may be understood in the same manner as the first-first post 140a to the first-fourth posts 140d connected to them, so that redundant descriptions will be omitted.

Any cell 200 located at a corner among the plurality of cells 200 arranged in the first and second directions X and Y may be surrounded by a plurality of posts. For example, a cell located at the lower right end based on FIG. 2 may be surrounded by the first-first post 140a, the first-fourth post 140d, the second-first post 160a, and the second-fourth post 160d from the plan view perspective. Furthermore, the cells 200 may come into contact with the inner surfaces 140ss of the first coupling posts 140 and the inner surfaces 160ss of the second coupling posts 160.

In an exemplary embodiment, the first-first post 140a may have a protrusion depression 140h recessed from its end surface 140u (the upper face based on FIG. 4), and the second-first post 160a may include a post protrusion 160p further protruding from its end surface 160u (the upper face based on FIG. 7). Furthermore, the first-second post 140b may include a post protrusion 140p further protruding from its end surface 140u, and the second-second post 160b may have a protrusion depression 160h recessed from its end surface 160u.

Furthermore, at least some or all of the first-third posts 140c may have protrusion depressions 140h, and at least some or all of the first-fourth posts 140d may include post protrusions 140p. Furthermore, at least some or all of the second-third posts 160c may include post protrusions 160p, and at least some or all of the second-fourth posts 160d may have protrusion depressions 160h.

For example, the first-first post 140a, the first-third posts 140c, the second-second post 160b, and the second-fourth posts 160d may have protrusion depressions 140h and 160h recessed from their end surfaces 140u and 160u. The end surfaces 140u and 160u may form the top surfaces of the posts 140a, 140c, 160b, and 160d. Furthermore, the first-second post 140b, the first-fourth posts 140d, the second-first post 160a, and the second-third posts 160c may include post protrusions 140p and 160p arranged on their end surfaces 140u and 160u

When configured as above, the first-first post 140a and the second-first post 160a, the first-second post 140b and the second-second post 160b, the first-third posts 140c and the second-third posts 160c, and the first-fourth posts 140d and the second-fourth posts 160d have complementary shapes, and the post protrusions 140p and 160p may be at least partially inserted into the protrusion depressions 140h and 160h.

In particular, by performing configuring as described above, the first and second brackets 110 and 120 may have different structures so that an assembler who assembles the battery module 10 may distinguish the first and second brackets 110 and 120 from each other. That is, the convenience of assembly may be increased. In other words, neither the first brackets 110 nor the second brackets 120 may be coupled together.

Furthermore, although not depicted in the drawings, at least some of the electrodes of the electrode units 310 and 320 may have protrusions formed to be connected to other electrical components outside the battery module 10. In this case, the protrusions of the electrodes may be taken out via depressions or recesses formed in the trays 130 and 150. Accordingly, assembly in an intended arrangement for the series/parallel connection of the cells 200 is required. The first and second brackets 110 and 120 may have an exclusive arrangement that does not overlap regardless of the rotation state thereof, so that only assembly in a set direction is possible. Therefore, the convenience of assembly/ manufacturing may be increased.

More specifically, as shown in FIGS. 4 and 7, in a state where the first tray 130 is placed on the lower side and the first coupling posts 140 are arranged to protrude upward and the second tray 150 is placed on the lower side and the second coupling posts 160 are arranged to protrude upward, no matter what form the first and second brackets 110 and 120 take, their first and second coupling posts 140 and 160 may not overlap each other.

For example, when the first-third posts 140c and the second-third posts 160c are placed in the same direction and the first-fourth posts 140d and the second-fourth posts 160d are placed in the same direction, as shown in FIGS. 4 and 7, a post (e.g., the first-first post 140a) having a protrusion depression 140h is positioned on one side of the first direction X of the first bracket 110, and a post (e.g., the first-second post 140b) having a post protrusion 140p is positioned on the other side of the first direction X. A post (e.g., the second-first post 160a) having a post protrusion 160p is positioned on one side of the second bracket 120 and a post (e.g., the second-second post 160b) having a protrusion groove 160h is positioned on the other side, so that the first and second brackets 110 and 120 may exhibit mutually exclusive arrangements.

For another example, the first bracket 110 is placed in the state shown in FIG. 4, the second bracket 120 is rotated such that the first-first post 140a and the second-second post 160b are placed in the same direction, the first-second post 140b and the second-first post 160a are placed in the same direction, a post (e.g., the first-third post 140c) having a protrusion depression 140h is positioned on one side of the first bracket 110 in the second direction Y, and a post (e.g., the first-fourth post 140d) having a post protrusion 140p is positioned on the other side of the second direction Y. A post (e.g., the second-third post 160c) having a post protrusion 160p is positioned on one side of the second bracket 120 and posts (e.g., the second-fourth posts 160d) having post depressions 160h are positioned on the other side, so that the first and second brackets 110 and 120 may have mutually exclusive arrangements.

As described above, the brackets 110 and 120 according to the present invention may include posts 140 or 160. The posts 140 and 160 have protrusions 140p or 160p or protrusion depressions 140h or 160h. The brackets 110 and 120 (or the posts 140 and 160) do not form fixed connections therebetween. Instead, the posts 140 and 160 of the present embodiment are provided to align horizontal positions between the first and second brackets 110 and 120, and are provided to come into contact with each other and slide in the third direction Z, but mutual end portions and mutual end surfaces 140u and 160u are spaced apart from each other, so that even when external vibration occurs, the cells 200 can be continuously tightened in the third direction Z with the constant force determined by the elastic force of the elastic coupling members. From this perspective, structures having different forms other than the posts extended in the third direction Z may be provided, and these will be disclosed in other embodiments described later. Furthermore, various other modifications may be considered by those skilled in the art.

Meanwhile, the first and second trays 130 and 150 may each have elastic deformation structures 131 each including a peripheral portion 131a (, or a first portion, or a tray base portion), bridge portions 131c (or second portions), and a central portion 131b (, or an island portion, or a third portion) and further including a central protrusion 131d. The peripheral portion 131a, the bridge portions 131c, and the central portion 131b are substantially the same in the first and second trays 130 and 150, and thus FIGS. 5 and 6 show only the first trays 130.

That is, any tray, e.g., the first tray 130, may have the elastic deformation structures 131 each including the peripheral portion 131a, the central portion 131b, and the bridge portions 131c connecting the peripheral portion 131a and the central portion 131b to each other. In an exemplary embodiment, from the plan view perspective, the central portion 131b may not have a perfect circle, but may have a ring shape with a central opening. This may facilitate elastic deformation near the central portion 131b. As described below, when the battery module 10 has been assembled, the central portion 131b may completely overlap each corresponding cell 200 in the third direction Z. In other words, the component referred to as the central portion 131b may be disposed to overlap the cell 200 and/or the extensions 331 and 351 of the electrodes in the third direction Z.

The peripheral portion 131a may refer to another portion of the tray 130 or 150 surrounding the central part 131b from the plan view perspective. In other words, the peripheral portion 131a refers to any portion of the tray 130 or 150 that does not overlap the central part 131b in the third direction Z. A portion of the peripheral portion 131a may overlap the cell 200 and/or the extensions 331 and 351 of the electrodes in the third direction Z. At the same time, another portion of the peripheral portion 131a may not overlap the cell 200 and/or the extensions 331 and 351 in the third direction Z.

Furthermore, the bridge portions 131c may connect the peripheral portion 131a and the central portion 131b to each other. The peripheral portion 131a, the bridge portions 131c, and the central portion 131b may be formed in an integrated manner without a physical boundary, and include an elastically deformable material as described above. Although a case where the one central portion 131b is connected to the peripheral portion 131a through the four bridge portions 131c is illustrated as an example in FIG. 5, etc., the bridge parts 131c may be three, five or more in number. Bridge openings 131g may be defined by the bridge portions 131c.

Furthermore, a central protrusion 131d may be further disposed on the bottom surface of the central portion 131b of the first tray 130, i.e., on the surface facing the cell 200, and the central protrusion 131d may be further disposed on the top surface of the central portion 131b of the second tray 150, i.e., on the surface facing the cell 200. The effects of using the peripheral portion 131a, the central portion 131b, the elastic bridge portions 131c, and the central protrusion 131d, and the disposition/arrangement relationship between the electrode units 310 and 320 and the cell 200 for this purpose will be described later.

The first tray 130 may further include the first ridge 133 that is disposed to protrude downward on the bottom surface overlapping the peripheral portion 131a in the third direction Z. The second tray 150 may further include the second ridge 153 that is disposed to protrude upward on the bottom surface overlapping the peripheral portion 131a in the third direction Z. The outer surface of the first ridge 133 may form the first well wall surfaces 133s having the shapes of portions of circular arcs from the plan view perspective. The outer surfaces of the second ridge 153 may form the second well wall surfaces 153s having the shapes of portions of circular arcs from the plan view perspective.

First bolt holes 130h into which the tightening bolts 400 to be described later are inserted may be formed in the first ridge 133, and second bolt holes 150h into which the tightening bolts 400 are inserted may be formed in the second ridge 153. The first bolt holes 130h may be exposed through the bottom surface 130s of the first ridge 133 (, or the bottom surface of the ridge; the top surface based on FIG. 4), and the second bolt holes 150h may be exposed through the top surface 150s of the second ridge (153) (, or the top surface of the ridge). The first and second ridges 133 and 153 may be spaced apart and face each other in the third direction Z. More specifically, in a state where the tightening bolts 400 have been tightened and thus the battery module 10 has been assembled, the bottom surface 130s of the first ridge 133 (the top surface based on FIG. 4) and the top surface 150s of the second ridge 153 may be spaced apart from each other in the third direction Z. A fastening structure using the first bolt holes 130h, the second bolt holes 150h, and the tightening bolts 400 will be described later.

The battery cells 200 may be interposed between the first and second trays 130 and 150. Although a case where the plurality of cells 200 are arranged with five cells arranged in the first direction X and two cells arranged in the second direction Y is illustrated in FIG. 2, the present invention is not limited thereto. The upper end portions of the cells 200 may be inserted into the first wells provided in the first tray 130, and the lower end portions thereof may be inserted into the second wells provided in the second tray 150.

Furthermore, the first electrode unit 310 (, or an upper electrode unit, or an upper conductor unit) may be compressed and interposed between the cells 200 and the first tray 130, and the second electrode unit 320 (, or a lower electrode unit, or a lower conductor unit) may be compressed and interposed between the cells 200 and the second tray 150. As a non-limiting example, the first electrode unit 310 and/or the second electrode unit 320 may not be directly coupled to the cells 200 by a method such as welding, but the cells 200 and the electrode units 310 and 320 may enter a state of being able to be disassembled when the first and second brackets 110 and 120 are removed.

In an exemplary embodiment, the first electrode unit 310 may include a plurality of electrodes (or upper conductive plates) that are physically separated from each other, and the second electrode unit 320 may include a plurality of electrodes (or lower conductive plates) that are physically separated from each other. For example, the first electrode unit 310 may include a first-first electrode 310a, a first-second electrode 310b, and a first-third electrode 310c, and the second electrode unit 320 may include a second-first electrode 320a, a second-second electrode 320b, and a second-third electrode 320c. The first-first electrode 310a to the first-third electrode 310c may have the same or different shapes, and the second-first electrode 320a to the second-third electrode 320c may have the same or different shapes.

The first and second electrode units 310 and 320 may come into contact with the top terminals (e.g., top caps) and bottom terminals (e.g., bottom caps) of the plurality of cells 200, and may provide electrical connection paths. Through this, at least some of the plurality of cells 200 may be connected in series and/or in parallel and provide a desired higher capacity or the like. The shape, number and the like of the above-described electrodes 310a, 310b, 310c, 320a, 320b, and 320c are not limited to those illustrated in the drawings, but may be appropriately provided for a desired series/parallel connection structure.

An electrode of any electrode unit, e.g., the first-first electrode 310a, may include first extensions 331 and first connections 332. In the same manner, the second-first electrode 320a may include second extensions 351 and second connections 352. In a state where the battery module 10 has been assembled, the first extension 331 and the corresponding second extension 351 may at least partially overlap any one cell 200 in the third direction Z. Furthermore, the plurality of first extensions 331 of any electrode, e.g., the first-first electrode 310a, provided for the electrical connection of adjacent cells 200 may be connected through the first connections 332. The plurality of second extensions 351 of the second-first electrode 320a provided for the electrical connection of adjacent cells 200 may be connected through the second connections 352. In this case, the width of the connections 332 and 352 may be smaller than the width of the extensions 331 and 351.

The maximum width of the extensions 331 or 351 of any electrode from the plan view perspective may be larger than that of the central portions 131b of the bridge structures 131 defining the base surfaces of the corresponding wells. That is, the extensions 331 and 351 may at least partially overlap the bridge openings 131g in the third direction Z. Furthermore, the extensions 331 and 351 of any electrode may at least partially overlap not only the central portion 131b and the bridge portions 131c but also the peripheral portion 131a in the third direction Z. In other words, the edges of the extensions 331 and 351 may interfere with the peripheral portions 131a from the plan view perspective. Furthermore, the bridge openings 131g in the form of openings may be completely sealed by the expansions 331 and 351, more specifically base portions 331a or 351a.

The extensions 331 and 351 of the individual electrodes 310a, 310b, 310c, 320a, 320b, and 320c may be inserted into the wells provided in the trays 130 and 150. For example, the first extensions 331 of the first electrodes 310a, 310b, and 310c of the first electrode unit 310 may be inserted into the first wells, respectively. The second extensions 351 of the second electrodes 320a, 320b, and 320c of the second electrode unit 320 may be inserted into the second wells, respectively.

Furthermore, the extensions of different electrodes are spaced apart from each other, but the extensions 331 or 351 of any one electrode are connected through the connections 332 and 352, as described above. In this case, each of the trays 130 and 150 may have connection recesses 133p so that the connections 332 and 352 can be inserted thereinto. In other words, the connections 332 and 352 of the individual electrodes 310a, 310b, 310c, 320a, 320b, and 320c may be inserted into the connection recesses 133p provided in the trays 130 and 150. For example, the first connections 332 of the first electrodes 310a, 310b, and 310c of the first electrode unit 310 may be inserted into the first connection recesses 133p, respectively, and the second connections 352 of the second electrodes 320a, 320b, and 320c of the second electrode unit 320 may be inserted into the second connection recesses, respectively.

Furthermore, the extensions 331 and 351 of the individual electrodes 310a, 310b, 310c, 320a, 320b, and 320c may each include a base portion 331a or 351a and a stepped portion 331b or 351b. The stepped portion 331b or 351b may refer to a portion that is depressed or protruded in the third direction Z compared to the base portion 331a or 351a to form a difference in height.

The first extensions 331 of the first electrodes 310a, 310b, and 310c of the first electrode unit 310 disposed on the tops of the cells 200 may include first stepped portions 331b shaped to protrude downward from the first base portions 331a. More specifically, when the first electrode unit 310 is disposed to be placed on the top of the cells 200 without being compressed, the height of the top surfaces of the first base portions 331a may be higher than that of the top surfaces of the first stepped portions 331b, and the height of the bottom surfaces of the first base portions 331a may be higher than the height of the bottom surfaces of the first stepped portions 331b. The heights of the top and bottom surfaces of the first base portions 331a may be the same as those of the top and bottom surfaces of the first connections 332.

In the same manner, the second extensions 351 of the second electrodes 320a, 320b, and 320c of the second electrode unit 320 arranged on the bottoms of the cells 200 may include second stepped portions 351b shaped to protrude upward from the second base portions 351a. More specifically, in a state where the second electrode unit 320 is disposed to be placed on the bottoms of the cells 200 without being compressed, the height of the top surfaces of the second base portions 351a may be lower than that of the top surfaces of the second stepped portions 351b and the height of the bottom surfaces of the second base portions 351a may be lower than that of the bottom surfaces of the second stepped portions 351b. The heights of the top and bottom surfaces of the second base portions 351a may be the same as those of the top and bottom surfaces of the second connections 352.

In the battery module 10 according to the present embodiment, in a state in which the plurality of cells 200 are arranged between the first and second brackets 110 and 120, the first electrode unit 310 is interposed between the first bracket 110 and the cells 200, and the second electrode unit 320 is interposed between the second bracket 120 and the cells 200, the first electrode unit 310 may be brought into close contact between the first bracket 110 and the cells 200 and the second electrode unit 320 may be brought into close contact between the second bracket 120 and the cell 200 by using the tightening bolts 400 and the coupling clip springs 500.

The tightening bolts 400 may each include a bolt thread portion 420 and a head portion 410. The bolt thread portion 420 may be at least partially inserted into or passes through the first bolt hole 130h of the first bracket 110 or the second bolt hole 150h of the second bracket 120 and provide the force for the first and second trays 130 and 150 to approach each other in the third direction Z. To this end, screw threads may be formed on the inner walls of the first and second bolt holes 130h and 150h. Furthermore, in a state where the tightening bolts 400 are inserted, the peripheral portions 131a of the first and second trays 130 and 150 may be at least partially elastically deformed.

In some embodiments, when the tightening bolts 400 are inserted from the upper side, i.e., the first bracket 110, head accommodation depressions 130g may be formed on the top (the top based on FIG. 1) of the first tray 130 so that the head portions 410 of the tightening bolts 400 do not protrude outward. Furthermore, the second tray 150 may be provided with inclined surfaces, such as bolt guide depressions 150g, so that the tightening bolts 400 having a long length in the third direction Z can be easily inserted into the second bolt holes 150h after passing through the first bolt holes 130h. The bolt guide depressions 150g have a depression shape with a slope that becomes narrower toward the bottom (the bottom in FIG. 1), and the bolt guide depressions 150g may be connected to the second bolt holes 150h.

The tightening bolts 400 according to the present embodiment may not be provided only to fasten the first and second brackets 110 and 120 so that they are not separated, but may be provided to provide force to bring the first and second brackets 110 and 120 as close as possible to each other in the third direction Z. In particular, when the cells 200 are arranged at a plurality of locations in the first and second directions X and Y in the form of a matrix, the first and second brackets 110 and 120 may be provided to tighten each other near the inner side or center of the set of cells 200. To this end, from the plan view perspective, any tightening bolt 400 may be positioned to be directly surrounded by four cells 200.

More specifically, an imaginary line passing through the center of the plane of each of the tightening bolts 400 in the first direction X and/or the second direction Y may not pass through the cell 200. In other words, the cell 200 may not appear in a section taken in the first or second direction X or Y to illustrate the center of the plane of the tightening bolt 400.

Furthermore, an imaginary line passing through the center of the plane of any tightening bolt 400 and forming a 45 degree angle with the first and second directions X and Y in the plane, to which the first and second directions X and Y belong, in a diagonal direction may pass through the cells 200. In other words, when a first cell and a second cell (which is a cell that does not overlap the first cell in the first and second directions X and Y) are defined out of the plurality of cells 200, the tightening bolt 400 may appear in a section view taken to illustrate the centers of the first and second cells from the plan view perspective. For example, the tightening bolt 400 may be positioned between the first cell and the second cell that is closest to the first cell in a diagonal direction (in this case, the diagonal direction is a direction forming 45 degrees with the first and second directions X and Y).

Furthermore, as described above, the first bolt holes 130h may be exposed through the bottom surface 130s (or the first end surface) of the first ridge 133, and the second bolt holes 150h may be exposed through the top surface 150s (or the second end surface) of the second ridge 153. As a non-limiting example, the bottom surface 130s of the first ridge 133 may be the surface forming the highest height in the first ridge 133 when the first tray 130 is disposed as in FIG. 4, and the top surface 150s of the second ridge 153 may be the surface forming the highest height in the second ridge 153 when the second tray 150 is disposed as in FIG. 7.

In this case, when the battery module 10 has been assembled, the first and second ridges 133 and 153 overlap each other in the third direction Z, but the bottom surface 130s of the first ridge 133 and the top surface 150s of the second ridge 153 may be spaced apart from each other in the third direction Z and may not be connected to each other. When the first and second ridges 133 and 153 come into contact with each other in the third direction Z unlike in the present invention, the effect in which the first and second trays 130 and 150 are tightened due to interference between the ridges and are thus elastically deformed and come into further close contact with each other is not achieved despite the use of bolts for the coupling. That is, since the degree of contact between the trays is determined by the height of the ridges, the effect that is the same as that of the present invention may not be exhibited.

Meanwhile, the first and second coupling posts 140 and 160 may have clip fastening grooves 141g and 161g. First catch portions 141 (or first catch structures) may be formed on the first coupling posts 140 by the clip fastening depressions 141g and 161g, and second catch portions 161 (or second catch structures) may be formed on the second coupling posts 160.

The coupling clip springs 500 (, or fixed clip, plate springs, or elastic coupling members) may be made of a metal material having elasticity. The coupling clip springs 500 may each include an extension portion 510, an upper clamp portion 521 and lower clamp portion 522 extending in the same direction respectively from both ends of the extension portion 510 in the third direction Z, an upper pressing portion 531 bent and extended from the upper clamp portion 521, and a lower pressing portion 532 bent and extended from the lower clamp portion 522. For example, when the first and second brackets 110 and 120 are arranged in the third direction Z, the upper and lower clamp parts 521 and 522 may be spaced apart and face each other in the third direction Z, the upper clamp portions 521 may be inserted at least partially into the clip fastening depressions 141g of the first coupling posts 140 and provide downward pressure to the first catch portions 141, and the lower clamp portions 522 may be inserted at least partially into the clip fastening depressions 161g of the second coupling posts 160 and provide upward pressure to the second catch portions 161. Although the present invention is not limited thereto, a user may press the upper pressing portions 531 downward and press the lower pressing portions 532 upward to separate the coupling clip springs 500 from the clip fastening depressions 141g and 161g.

The above-described coupling clip springs 500 may be provided to fasten any first coupling posts 140 and any second coupling posts 160 that are connected in a complementary manner to each other. As described above, when the coupling clip springs 500 have been inserted into the clip fastening depressions 141g or 161g and the battery module 10 has been assembled, the post protrusion 140p of any first coupling post 140 may be inserted into the protrusion depression 160h of any second coupling post 160, and the post protrusion 160p of any other second coupling post 160 may be inserted into the protrusion depression 140h of any other first coupling post 140. Furthermore, in an exemplary embodiment, when the coupling clip springs 500 have been inserted into the clip fastening depressions 141g and 161g and thus the battery module 10 has been assembled, the first end surface 140u of any first coupling post 140 and the second end surface 160u of any second coupling post 160, which are aligned with each other in the horizontal direction in a protrusion-depression structure, may be spaced apart from each other in the third direction Z.

The first and second coupling posts 140 and 160 according to the present embodiment are provided to align the first and second brackets 110 and 120 in the horizontal direction. The coupling clip springs 500 coupled to the coupling posts 140 and 160 may not be provided only to fasten the first and second brackets 110 and 120 so that they are not separated from each other, but may be provided to continuously apply the force for the first and second brackets 110 and 120 to be tightened toward each other in the third direction Z. For example, while the above-described tightening bolts 400 provide tightening force in the central regions between the cells 200 from the plan view perspective, the coupling clip springs 500 may provide tightening force in the edge regions surrounding the cells 200 from the plan view perspective.

In this case, even when the battery module 10 has been assembled and sufficiently tightened, the first end surfaces 140u of all the first coupling posts 140 and the second end surfaces 160u of the second coupling posts 160 are spaced apart from each other so that the first and second trays 130 and 150 can come into close contact with each other. When the first and second end surfaces come into contact with each other unlike in the present invention, the effect in which the first and second trays 130 and 150 are tightened to each other by the interference between the first and second end surfaces 140u and 160u and are thus elastically deformed and come into further close contact with each other is not achieved despite the coupling using the coupling clip springs. That is, since the degree of contact between the trays is determined by the height of the first and second coupling posts, the effect that is the same as that of the present invention may not be exhibited.

A structure in which the electrode units 310 and 320 come into close contact with each other will be described below.

As shown in FIGS. 10 and 14, in a state where the battery module 10 has been assembled, i.e., in a state where the first and second brackets 110 and 120 are tightened in the third direction Z by the tightening bolts 400 and/or the coupling clip springs 500 described above and thus the cells 200, the electrode units 310 and 320 and the trays 130 and 150 come into close contact with each other, the center portion 131b of any tray may form a height in the third direction Z that is different from that of the peripheral portion 131a. For example, when the following description will be made based on the first tray 130 on the upper side, the difference HD between the height of the top surface of the center portion 131b and the height of the top surface of the peripheral portion 131a may be about 0.1 mm to 0.3 mm.

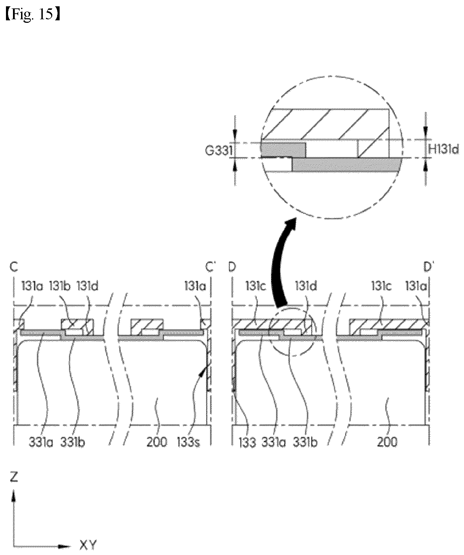

That is, when the battery module 10 has been assembled, the trays 130 and 140 of the brackets 110 and 120 and the electrode units 310 and 320 are at least partially elastically deformed and may have different shapes than before having been assembled. More specifically, when the following description will be made using the first bracket 110 as an example, the cells 200 may push the first electrode unit 310 and the bottom surface of the first bracket 110 upward, the extensions 331 of the first electrode unit 310 may be deformed, and the elastic bridge portions 131c may also be deformed. In connection with this, reference will be made to FIGS. 15 to 17 further.

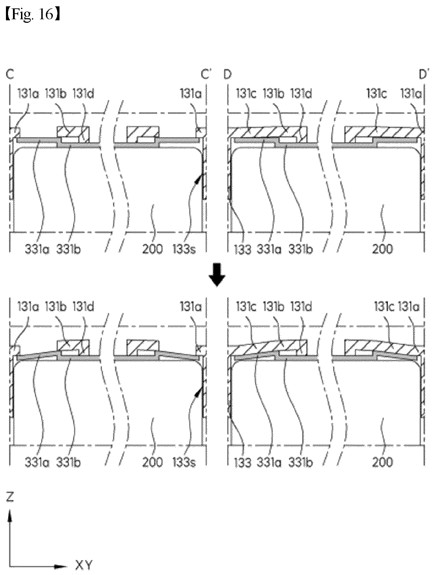

FIGS. 15 and 16 are sectional views showing a state in which the position of FIG. 14 changes during a process in which the battery module is assembled. More specifically, FIG. 15 is a sectional view showing a state in which the first bracket, the first electrode unit, and the cells are not compressed to each other, and FIG. 16 is a sectional view showing a process in which the first electrode unit and the first bracket are elastically deformed as the first bracket, the first electrode unit, and the cells are compressed during the assembly process.

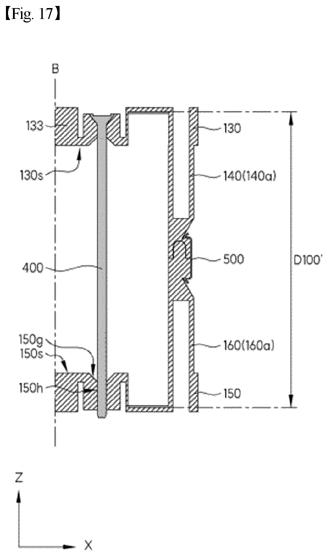

FIG. 17 is a sectional view showing a state where no cell is interposed between the first and second brackets, which is a sectional view showing a position corresponding to FIG. 11.

Although the following description will be made using the first bracket 110 and the first electrode unit 310 arranged above the cells 200 as examples, the deformation of the second bracket 120 and the second electrode unit 320 may also be understood in the same manner.

Referring further to FIGS. 15 to 17, first, as shown in FIG. 15, in a state where no direct compressing force is provided between the first bracket 110, any electrode of the first electrode unit 310, and the cells 200 (in a state where the battery module 10 is not assembled), the top surfaces of the peripheral portion 131a, the central portion 131b, and the bridge portions 131c form the same height, and the top surface of the first tray 130 may be approximately flat.

Furthermore, the top surfaces of the base portion 331a and stepped portion 331b of the extension 331 of any electrode of the first electrode unit 310 may be positioned at different heights, but may have approximately flat top surface spaces. In this state, as the cells 200 move upward, the bottom surfaces of the stepped portions 331b may come into contact with the upper terminals of the cells 200. When the protrusion height H131d of the protrusions 131d is higher than the depth G331 of the stepped portion 331b as shown in FIG. 15, the lower ends of the protrusions 131d may come into contact with the top surfaces of the stepped portions 331b, and the base portions 331a may be spaced apart from the central portions 131b and the bridge portions 131c in the third direction Z. In this case, the depth G331 of the stepped portions 331b may be defined as the difference in height between the top surfaces of the stepped portions 331b and the top surfaces of the base portions 331a and/or the difference in height between the bottom surfaces of the stepped portions 331b and the bottom surfaces of the base portions 331a in a state where no separate external force is applied.

Furthermore, as shown in FIG. 16, when the cells 200 move further upward, the elastic deformation of the bridge portions 131c may be performed first, for example, before the shapes of the expansions 331 of the electrodes are deformed. For example, as shown in the upper side of FIG. 16, the bottom surfaces of the stepped portions 331b are maintained in a state of being in contact with the upper terminals of the cells 200, and the top surfaces of the stepped portions 331b come into contact with the bottom surfaces of the protrusions 131d, but the central portions 131b and the protrusions 131d are slightly pushed upward and thus the bridge portions 131c may be elastically deformed. In this case, the bridge portions 131c may be at least partially separated from the base portions 331a As in the present embodiment, the upper electrodes have stepped portions 331b on the lower side and the lower electrodes have stepped portions 331b on the upper side, so that they can receive a large force and be deformed in a process in which the cells 200 come into close contact with each other.

Then, when the cells 200 move further upward, for example, when the battery module 10 is assembled, the top surfaces of the base portions 331a may be elastically deformed and inclined in a state of being in contact with the bottom surfaces of the peripheral portions 131a and the central portions 131b. Furthermore, the top surfaces of the stepped portions 331b may further push the protrusions 131d and the central portions 131b upward, and the bridge portions 131c may be further deformed.

Meanwhile, the above-described FIG. 11 shows a state in which the battery module 10 has been assembled, and FIG. 17 shows a state in which the first and second brackets 110 and 120 are coupled to be as close as possible in the third direction Z in a state in which no cell is present.

As described above, when the cells 200 are present, upward force and downward force may be applied to the first and second trays 130 and 150, respectively. Accordingly, when the battery module 10 has been assembled, the distance D100 between the peripheral portions 131a of the first tray 130 and the peripheral portions 131a of the second tray 150 in the third direction Z may be substantially the same as the length H200 of the cells 200 in the third direction Z, or may be slightly larger when the thickness of the electrodes is taken into consideration. The reason for this may be that tightening force is applied near the peripheral portions 131a by the tightening bolts 400. Furthermore, in a state where the battery module 10 has been assembled, the post protrusions 140p and 160p of the coupling posts 140 and 160 are not fully inserted into the protrusion depressions 140h or 160h. Accordingly, the end surfaces 140u of the first coupling posts 140 and the end surfaces 160u of the second coupling posts 160 may be spaced apart from each other in the third direction Z.

In contrast, when no cell 200 is present as in FIG. 17, the first and second brackets 110 and 120 may be further brought into contact with each other in the third direction Z, for example, the post protrusions 140p and 160p are completely inserted into the protrusion depressions 140h or 160h, and/or the end surfaces 140u of the first coupling posts 140 and the end surfaces 160u of the second coupling posts 160 may come into contact with each other. In this case, the distance D100' between the peripheral portions 131a of the first tray 130 and the peripheral portions 131a of the second tray 150 in the third direction Z may be smaller than the distance D100 in the state where the battery module 10 has been assembled and the height H200 of the cells 200.

By utilizing the structures of the extensions 331 including the base portions 331a and stepped portions 331b of the electrode units 310 and 320, the elastic bridge structures 131 including the protrusions 131d, the central portions 131b, the bridge portions 131c, and the peripheral portions 131a, and the elastic deformation thereof, the cells 200 may be tightened and come into sufficiently close contact with each other and compressed into each other regardless of the distance D100' defined by the coupling posts 140 and 160. When the cells 200 are coupled using mechanical structures such as coupling posts unlike in the present invention, it is impossible to exclude the possibility that the cells 200 are misaligned due to external impact and/or vibration, and accordingly, it is impossible to ensure stable electrical connections.

Another embodiment of the present invention will be described below. However, descriptions of the configurations that are substantially the same as those of the above-described embodiments will be omitted, and these can be easily understood by those skilled in the art from the accompanying drawings.

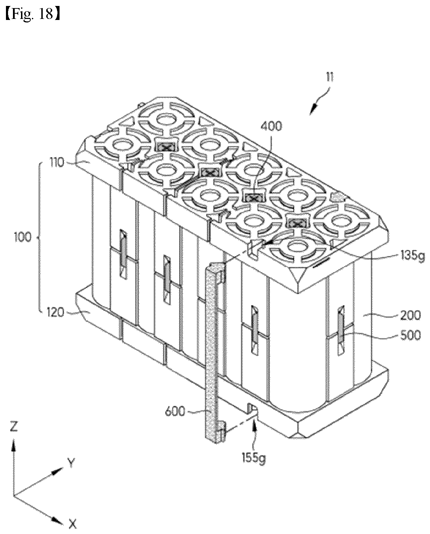

FIG. 18 is an exploded perspective view of a battery module according to another embodiment of the present invention.

Referring to FIG. 18, a battery module 11 according to the present embodiment may further include a fastening elastic part 600 in addition to the battery module of FIG. 1 described above.

The first tray of the first bracket 110 may have at least one fastening elastic part first insertion depression 135g, and the second tray of the second bracket 120 may have at least one fastening elastic part second insertion depression 155g. The first insertion depression 135g and the second insertion depression 155g may overlap each other in the third direction Z.

The fastening elastic part 600 (or a fastening steel wire) may be a wire member made of an elastic material such as metal. Using the fastening elastic part 600, the first and second brackets 110 and 120 may be further tightened in the third direction Z outside the battery module 11, thereby further increasing the stability of arrangement of the cells 200.

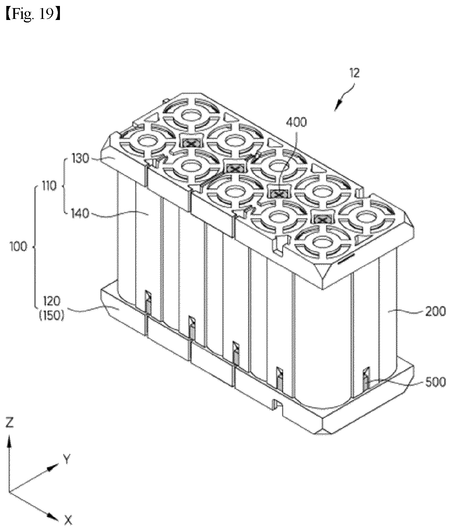

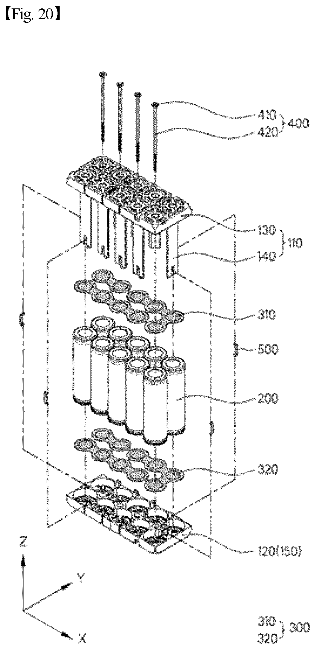

FIG. 19 is a perspective view of a battery module according to still another embodiment of the present invention. FIG. 20 is an exploded perspective view of FIG. 19.

Referring to FIGS. 19 and 20, a battery module 12 according to the present embodiment includes a first bracket 110, a second bracket 120, and battery cells 200 and electrode units 310 and 320 interposed between the first and second brackets 110 and 120, but is different from that of the embodiment of FIG. 1 in that the coupling posts of the second bracket 120 are omitted.

That is, the battery module of the present invention includes a first bracket 110 and a second bracket 120, but the coupling posts of any one of the first and second brackets 110 and 120 may be omitted.

In the present embodiment, the second bracket 120 includes a second tray 150 in which second wells are formed and protrusions which are arranged on the top surface of the second tray 150, and clip fastening depressions may be formed on the outer surface of the second tray 150.

Furthermore, the first bracket 110 includes a first tray 130 in which first wells are formed and a plurality of first coupling posts 140 which protrude downward from the first tray 130, and post protrusions may be arranged on the end surfaces of the first coupling posts 140 or protrusion depressions may be formed therein.

Furthermore, coupling clip springs 500 may be inserted into the clip fastening depressions of the second tray 150 and the clip fastening depressions of the first coupling posts 140, and may fasten the first and second brackets 110 and 120 and provide tightening elastic force in the third direction Z.

As described above, the plurality of first coupling posts 140 may have post protrusions and protrusion depressions. Furthermore, protrusion depressions and protrusions corresponding to the protrusions and protrusion depressions of the first coupling posts 140 may be formed at the positions of the top surface of the second tray 150 corresponding to the positions of the first coupling posts 140. That is, when the battery module 12 is assembled, the post protrusion of any first coupling post 140 may be at least partially inserted into the protrusion depression formed on the top surface of the second tray 150, and a protrusion disposed on the top surface of the second tray 150 may be at least partially inserted into the protrusion depression of any first coupling post 140.

Furthermore, as described above, the end surfaces (i.e., the bottom surfaces based on FIG. 20) of the first coupling posts 140 of the first bracket 110 and the top surface of the second tray 150 of the second bracket 120 may be at least partially spaced apart from each other in the third direction Z so that the relative positions of the first and second brackets 110 and 120 can be fixed and the cells 200 can be stably fastened by the tightening force, provided by the coupling clip springs 500, in the third direction Z.

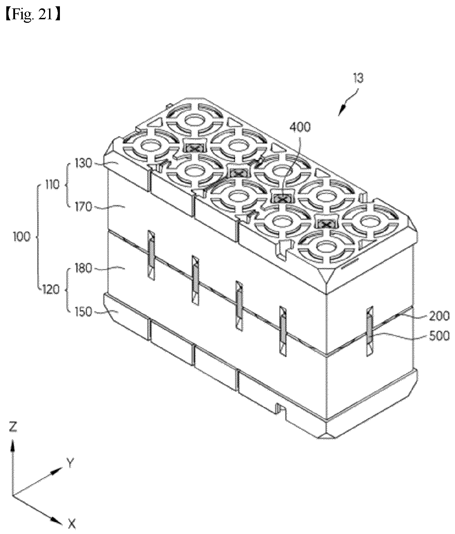

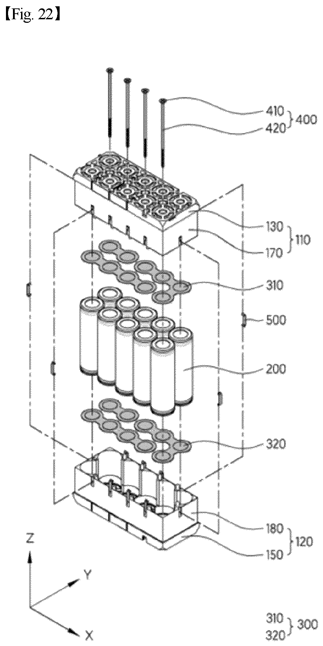

FIG. 21 is a perspective view of a battery module according to still another embodiment of the present invention. FIG. 22 is an exploded perspective view of FIG. 21.

Referring to FIGS. 21 and 22, a battery module 13 according to the present embodiment includes a first bracket 110, a second bracket 120, and battery cells 200 and electrode units 310 and 320 interposed between the first and second brackets 110 and 120, but is different from those of the embodiments of FIG. 1 and the like in that the first and second brackets 110 and 120 do not include components that are referred to as posts.

For example, the battery module of the present invention includes the first and second brackets 110 and 120, and one or both of the first and second brackets 110 and 120 do not include posts and may include wall parts 170 and 180.

In an exemplary embodiment, the first bracket 110 may include a first tray 130 and a first wall part 170 protruding downward from the first tray 130, and may further include one or more protrusions arranged on the end surface of the first wall part 170. In the same manner, the second bracket 120 may include a second tray 150 and a second wall part 180 protruding upward from the second tray 150, and may further include one or more protrusions arranged on the end surface of the second wall part 180.

More specifically, protrusion depressions (e.g., first protrusion depressions) may be formed on the end surface (the bottom surface based on FIG. 22) of the first wall part 170. Furthermore, protrusions (e.g., first protrusions) may be disposed on the end surface of the first wall part 170.

Protrusion depressions (e.g., second protrusion depressions) may be formed on the end surface (the top surface based on FIG. 22) of the second wall part 180. Furthermore, protrusions (e.g., second protrusions) may be arranged on the end surface of the second wall part 180.

As in the above-described embodiment, the first protrusions of the first bracket 110 are at least partially inserted into the second protrusion depressions formed in the second bracket 120 and the second protrusions formed on the second bracket 120 are at least partially inserted into the first protrusion depressions formed in the first bracket 110, so that the positions of the first and second brackets 110 and 120 in the horizontal direction can be aligned.

Furthermore, the coupling clip springs 500 are inserted into the clip fastening depressions formed on the outer surface of the first wall part 170 and the clip fastening depressions formed on the outer surface of the second wall part 180, so that the first and second brackets 110 and 120 are fastened to provide tightening elastic force in the third direction Z.

As described above, in the state where the battery module 13 has been assembled, any first protrusion is at least partially inserted into the second protrusion depression at the corresponding position, and any second protrusion is at least partially inserted into the first protrusion depression at the corresponding position, but the end surface (the bottom surface based on FIG. 22) of the first wall part 170 and the end surface (the top surface based on FIG. 22) of the second wall part 180 are at least partially spaced apart from each other in the third direction Z, so that the cells 200 can be stably fixed by the tightening elastic force provided by the coupling clip springs 500.

Although the present invention has been described above with a focus on the embodiments, this is only an example and does not limit the present invention. It will be easily understood by those having ordinary skill in the art to which the present invention pertains that various modifications and applications that are not described or illustrated above may be made without departing from the essential features of the embodiments of the present invention.

Therefore, the scope of the present invention should be understood to include modifications, equivalents, and substitutes of the technical spirit that has been described or illustrated above. For example, the individual components specifically described in conjunction with the embodiments of the present invention may be modified and then implemented. Furthermore, the differences related to such modifications and applications should be interpreted as being included in the scope of the present invention defined in the appended claims.

## Claims

1. A battery module comprising:
a first bracket including a first tray in which first wells are formed;
a second bracket including a second tray in which second wells are formed;
a plurality of cells configured to be at least partially inserted into the first and second wells;
one or more first electrodes disposed between the first tray and the cells;
one or more second electrodes disposed between the second tray and the cells; and
one or more elastic coupling members configured to provide elastic force intended to at least partially tighten the first and second brackets in a third direction.

2. The battery module of claim 1,
wherein the first bracket includes one or more protrusions arranged on a first end surface thereof; wherein the second bracket includes one or more protrusion depressions formed on a second end surface thereof; and
wherein, in a state where the battery module has been assembled, the protrusions are at least partially inserted into the protrusion depressions, and the first and second end surfaces are spaced apart and face each other in the third direction.

3. The battery module of claim 1,
wherein the first tray includes at least one first ridge defining a plurality of first wells, and the second tray includes at least one second ridge defining a plurality of second wells;
wherein one or more first bolt holes are formed in the first ridge, and one or more second bolt holes are formed in the second ridge;
wherein the battery module further includes one or more bolts configured to be at least partially inserted into or pass through the first or second bolt holes; and
wherein, in a state where the battery module has been assembled, a bottom surface of the first ridge where the first bolt holes are exposed and a top surface of the second ridge where the second bolt holes are exposed are spaced apart and face each other in the third direction.

4. The battery module of claim 1, wherein the elastic coupling members are arranged to tighten and couple the first end surface of the first bracket and the second end surface of the second bracket spaced apart from the first end surface in the third direction.

5. The battery module of claim 1,
wherein the first bracket further includes a plurality of first coupling posts protruding from the first tray, and the second bracket further includes a plurality of second coupling posts protruding from the second tray;
wherein at least some of the plurality of first coupling posts include protrusions, and another some thereof include protrusion depressions;
wherein at least some of the plurality of second coupling posts include protrusions, and another some thereof include protrusion depressions; and
wherein the first bracket including the first coupling posts and the second bracket including the second coupling posts have exclusive arrangements that do not overlap each other in any rotational state.

6. The battery module of claim 1, wherein the first tray includes peripheral portions and central portions surrounded by the peripheral portions, and heights of the peripheral portions and the central portions in the third direction are elastically deformed differently when the battery module has been assembled.
